# EUROPÄISCHE PATENTSCHRIFT

(11) **EP 0 884 500 B1**
(45) Veröffentlichungstag und Bekanntmachung des Hinweises auf die Patenterteilung: **20.08.2003**
(21) Anmeldenummer: 98107379.4
(22) Anmeldetag: 23.04.1998
(51) Int. Cl.: F16F 9/44, F16K 35/04

(54) **Dämpfventil mit einstellbarer Dämpfkraft**
Adjustable damping valve
Soupape à amortissement variable

(30) Priorität: 10.06.1997 DE 19724328
(43) Veröffentlichungstag der Anmeldung: 16.12.1998
(73) Patentinhaber: ZF Sachs AG, 97424 Schweinfurt (DE)
(72) Erfinder: Rottenberger, Theo Dipl.-Ing.(FH), 97705 Gefäll (DE); Münz, Rolf, Dipl.-Ing., 97506 Grafenrheinfeld (DE)

(56) Entgegenhaltungen:
- DE-A- 19 542 293
- DE-C- 19 547 910
- US-A- 4 076 225
- US-A- 4 515 253
- PATENT ABSTRACTS OF JAPAN vol. 1997, no. 02, 28. Februar 1997 (1997-02-28) & JP 08 270713 A (KAYABA IND CO LTD), 15. Oktober 1996 (1996-10-15)

## Beschreibung

Die Erfindung betrifft ein Dämpfventil mit einstellbarer Dämpfkraft entsprechend dem Oberbegriff von Patentanspruch 1.

Aus der DE 195 42 293 A1 ist ein einstellbares Dämpfventil in einem Dämpfventilgehäuse für einen Schwingungsdämpfer, umfassend einen Ventilblock mit einer Zuströmöffnung im Bereich einer Ventilsitzfläche, auf der sich eine Ventilscheibe abstützt, die auf ihrer Rückseite von einer Feder vorgespannt ist, wobei die Vorspannung der Feder zur Veränderung der Dämpfkraft einstellbar ist, indem eine Abstützfläche der Feder verschiebbar ist, bekannt. Der Schwingungsdämpfer, in dem das einstellbare Dämpfventil eingebaut ist, wird bevorzugt für den Motorsport eingesetzt. Folglich müssen die Dämpfventil jeweils auf das Fahrzeug und dann in Abhängigkeit der Rennstrecke abgestimmt werden können. Bei den hohen Belastungen muß ausgeschlossen sein, daß sich die Dämpfventile in ihrer Dämpfkraft durch die auftretenden Fahrzeugvibrationen verstellen. Die einfachste Möglichkeit besteht darin, ein einmal eingestelltes Ventil durch geeignete Maßnahmen, beispielsweise Gewindesicherungspaste festzusetzen. Es kann aber sein, daß ausgerechnet diese Einstellung beim nächsten Renneinsatz völlig unbrauchbar ist.

Die US 4, 515,253 beschreibt als nächstliegender Stand der Technik ein einstellbares Dämpfventil für einen Schwingungsdämpfer, welches ein Dämpfventilgehäuse mit einem Ventilblock umfaßt. Der Ventilblock verfügt über eine Zuströmöffnung im Bereich einer Ventilsitzfläche, auf der sich eine Ventilscheibe abstützt, die auf ihrer Rückseite von einer Feder vorgespannt ist. Die Vorspannung der Feder ist zur Veränderung der Dämpfkraft einstellbar, indem eine Abstützfläche der Feder verschiebbar ist, wobei die von der Ventilscheibe abgewandte Abstützfläche der Feder mit einer Rasteinrichtung in Wirkverbindung steht, die zur Einstellung der Vorspannung der Feder stufenweise arretierbar ist. Die Rasteinrichtung verfügt bezogen auf die Ventilscheibe über separate Vorspannfedern, die sich an einer Gehäusehälfte der Rasteinrichtung abstützen.

Aufgabe der vorliegenden Erfindung ist es ein verstellbares Dämpfventil so weiterzuentwickeln, daß das aus dem Stand der Technik bekannte Problem behoben ist.

Erfindungsgemäß wird die Aufgabe dadurch gelöst, indem die Feder, die auf die Ventilscheibe einwirkt, Rastkörper der Rasteinrichtung in einem Rastprofil kraftbeaufschlägt.

Die Doppelfunktion der Ventilfeder ermöglicht eine sehr kompakte Bauweise. Man benötigt bis auf die Rastkörper praktisch keine zusätzlichen Bauteile, die es im Ventil unterzubringen gilt.

Des weiteren ist vorteilhafterweise vorgesehen, daß die Rasteinrichtung eine verdrehbare Antriebshülse aufweist, die mit einer Verschiebehülse zusammenwirkt, wobei die Verschiebehülse die Abstützfläche aufweist und mittels einer Übersetzungseinrichtung die Drehbewegung der Antriebshülse als eine Axialbewegung ausführt. Durch den Einsatz der Übersetzungseinrichtung kann die Antriebshülse axial ortsfest ausgeführt sein. Die Antriebshülse liegt zumindest teilweise im Gehäusebereich des Ventilgehäuse. Die axial ortsfeste Lage der Antriebshülse erleichtert die Abdichtung zum Ventilgehäuse, da kein axial veränderlicher Spalt auftritt, in den Schmutz oder Feuchtigkeit eindringen kann.

So besteht die Übersetzungseinrichtung gemäß einem vorteilhaften Unteranspruch aus einem Gewinde zwischen der Antriebshülse und der Verschiebehülse, wobei die Bewegungsfähigkeit der Verschiebehülse durch eine Axialführung in Umfangsrichtung blockiert ist.

Als Rastkörper werden Kugeln eingesetzt, die in dem Äquator der Kugeln angepaßte Vertiefungen des Rastprofils einrasten. Die Kugeln haben nicht nur gute Rolleigenschaften, sondern sind auch noch vergleichsweise kostengünstige Bauteile.

Des weiteren ist vorgesehen, daß konzentrisch zum beschriebenen Dämpfventil ein weiteres Dämpfventil angeordnet ist, wobei das weitere Dämpfventil aus einer innenliegenden Trägerhülse besteht, in der ein federbelastetes Ventilelement angeordnet ist, wobei die Vorspannung der Feder dieses Dämpfventils mittels einer von außerhalb des Ventilgehäuses zugänglichen Einstellvorrichtung veränderbar ist, indem die Einspannlänge der Feder veränderbar ist, wobei die Einstellvorrichtung ein Verdrehelement aufweist, das relativ zur Trägerhülse verdrehbar ist, die wiederum bezogen auf das weitere Dämpfventil als ortsfest zu betrachten ist, wobei die mögliche Drehbewegung des Verdrehelementes mittels einer zweiten Rasterung arretierbar ist. Damit ist auch dieser Ventilteil gegen ungewolltes Verstellen gesichert. Dabei ist die zweite Rasterung zwischen der Trägerhülse und der Einstellvorrichtung angeordnet.

Damit die Fixierung beider Dämpfventilteile unabhängig erfolgen kann, steht das Verdrehelement über einen Formschluß in Umfangsrichtung in Eingriff mit einer Spannhülse, die axial aber relativ zum Verdrehelement beweglich ist, wobei zwischen der Spannhülse und der Trägerhülse eine Gewindeverbindung vorliegt, so daß eine Bewegung des Verdrehelementes in eine Axialbewegung der Spannhülse umgesetzt wird.

Die konzentrische Anordnung der Ventilteile ermöglicht eine Bauform der Rasteinrichtung, bei der das Verdrehelement eine Queröffnung aufweist, in der eine Rastfeder im wesentlichen horizontal angeordnet ist, die auf mindestens einen Rastkörper der zweiten Rasteinrichtung einwirkt. Im Hinblick auf eine besonderes raumsparende Bauweise ist die Rastfeder in der Queröffnung zwischen zwei gegenüberliegenden Rastkörpern verspannt.

Gemäß einem weiteren vorteilhaften Merkmal greifen die Rastkörper in Rastöffnungen der Trägerhülse ein, von denen mindestens eine als eine Durchgangsöffnung ausgeführt ist und einen Formschluß mit der Antriebshülse des einen Teilventils eingeht. Die Bauteile lassen sich insgesamt einfacher herstellen.

Anhand der folgenden Figurenbeschreibung soll die Erfindung näher erläutert werden.
- Fig. 1: Schwingungsdämpfer mit verstellbarem Dämpfventil
- Fig. 2: Dämpfventil in einer Ausschnittdarstellung
- Fig. 3: Dämpfventil, dessen Antriebshülse und Spannhülse in einer einteiligen Baueinheit ausgeführt sind

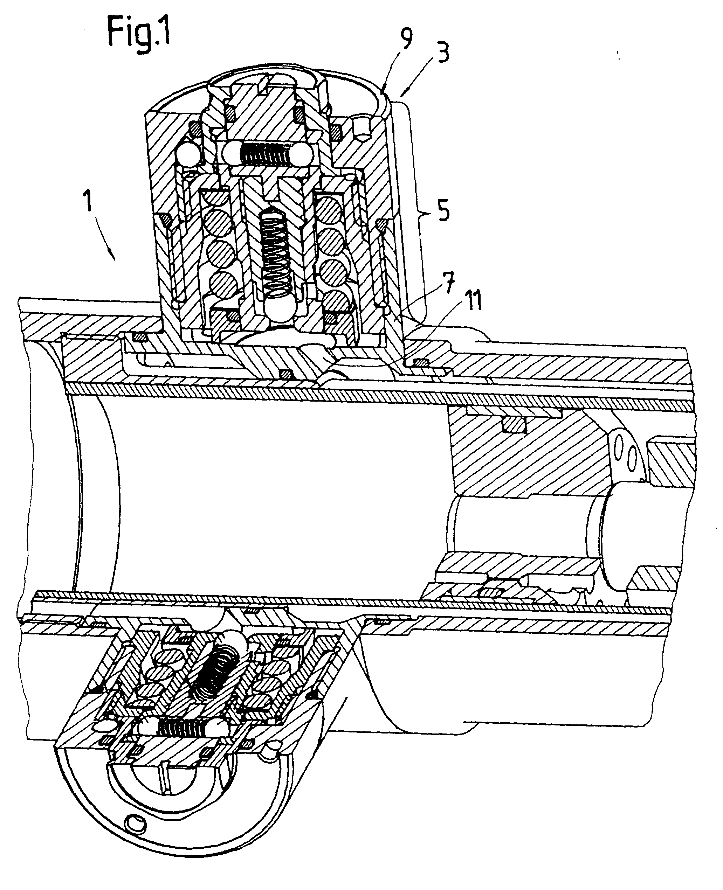

Die Fig. 1 zeigt einen Schwingungsdämpfer 1 mit einem erfindungsgemäßen Dämpfventil 3, wobei der funktionale und konstruktive Aufbau des Schwingungsdämpfers aus der DE 195 42 293 A1 als zu dieser Erfindung offenbart vorausgesetzt wird.

Das Dämpfventil 3 ist innerhalb eines Ventilgehäuses 5 angeordnet, das wiederum aus einem Ventilblock 7 und einer Endkappe 9 besteht, die miteinander verschraubt sind. Über eine Zuströmöffnung 11 fließt Dämpfmedium in das Dämpfventil ein. Das Dämpfventil umfaßt ein erstes Einzelventil, das aus einer axial beweglichen Ventilscheibe 13 besteht, die sich auf einer Ventilsitzfläche 15 des Ventilblocks 7 abstützt. Ein Feder 17 spannt die Ventilscheibe in Schließrichtung vor.

Die Vorspannlänge der Feder 17 ist mittels einer von außerhalb des Dämpfventilgehäuses 5 zugänglichen Antriebshülse 19 einstellbar, die die Endkappe 9 durchgreift. Die Einstellung erfolgt dadurch, indem eine Abstützfläche 21 der Feder 17 axial verschoben wird. Die Abstützfläche wird funktional von einer Verschiebehülse 23 bereitgestellt, wobei zwischen der Feder und der Abstützfläche ggf. eine Unterlegscheibe 25 angeordnet sein kann.

Zwischen der Antriebshülse 19 und der Verschiebehülse ist eine Übersetzungseinrichtung wirksam, die aus einem Gewinde 27 zwischen der Antriebshülse und der Verschiebehülse 23 und einer Axialführung 29 zwischen dem Ventilblock 7 und der Verschiebehülse 23 besteht. Eine Drehbewegung der Antriebshülse wird auf die Verschiebehülse übertragen, wobei die von dem Gewinde 27 ausgehende überlagerte Dreh- und Axialbewegung der Gewindegänge in eine reine Axialbewegung umgesetzt wird, da die Axialführung 29 zwischen dem Ventilblock und der Verschiebehülse ein Mitdrehen der Verschiebehülse verhindert. Die Axialführung kann beispielsweise als ein Keilprofil ausgeführt sein. Dabei bewegt sich die Verschiebehülse relativ zu axial ortsfesten Antriebshülse. Die Antriebshülse wird ausgehend von der Ventilsitzfläche 15 über die Ventilscheibe 13 mittels der Feder 17, die, wie bereits beschrieben auf die Verschiebehülse einwirkt, über das Gewinde 27 gegen eine Stirnfläche 31 der Endkappe 9 vorgespannt und damit axial ortsfest gehalten. Zusätzlich wirkt noch der Betriebsdruck im Schwingungsdämpfer auf dieselbe Art und Weise.

Zur Sicherung der eingestellten Vorspannlänge der Feder 17 dient eine Rasteinrichtung, die aus einem Rastprofil 33 in der Stirnseite 31 der Endkappe 9, einem Rastprofil 35 in einem Absatz 37 der Antriebshülse 19 und kugelförmigen Rastkörpern 39 besteht. Bei den Rastprofilen handelt es sich um kegelige Vertiefungen, die in Umfangsrichtung in der Stirnseite und dem Absatz eingeformt sind und in Überdeckung gebracht werden können. Bei einer Drehbewegung der Antriebshülse, wofür Werkzeugflächen 41 vorgesehen sind (s. Fig. 1), kann die Arretierung gelöst werden, indem sich die Antriebshülse gegen die Vorspannkraft der Feder 17 in Richtung der Ventilsitzfläche 15 bewegt. Diese Axialbewegung führt die Verschiebehülse zwangsläufig mit aus. Damit erfüllt die Feder zwei Funktionen. Zum einen bestimmt die Feder das Abhubverhalten der Ventilscheibe 13 und damit die Dämpfkraft und zum anderen ist sie Teil der Rasteinrichtung.

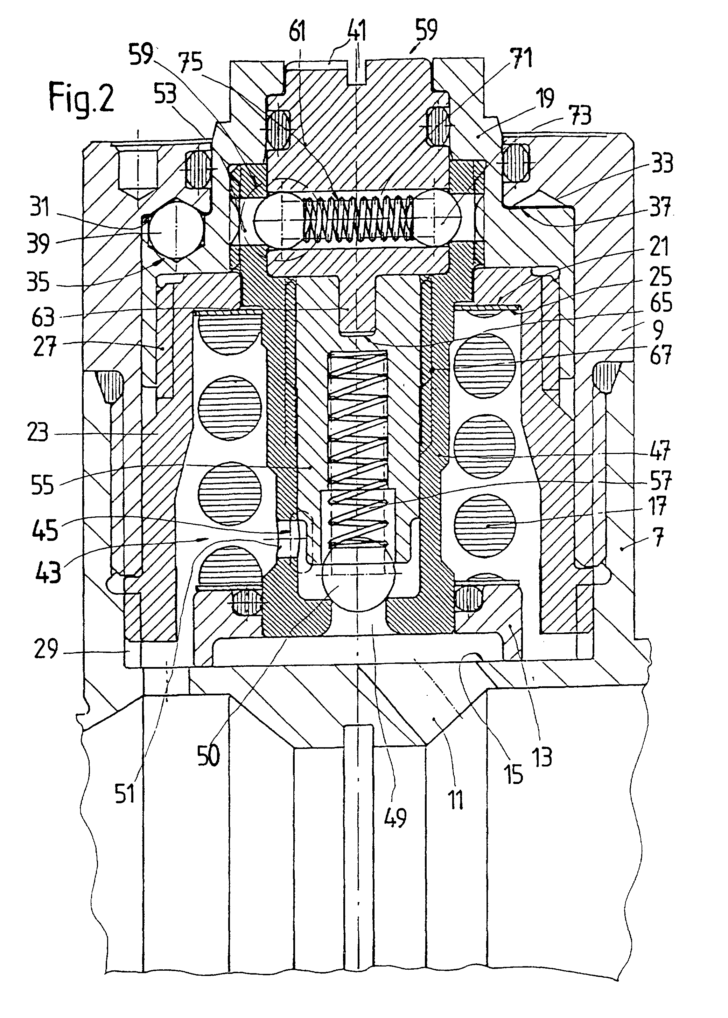

In den Fig. 1 und 2 werden unterschiedliche Lagerstellen für die Rastkörper 39 eingesetzt. in der Fig. 1 ist das Rastprofil 33 so tief ausgeführt, daß der Äquator der Rastkörper von der Endkappe überdeckt wird. Der Absatz 37 stellt die Laufbahn für die Rastkörper dar. In der Ausführung nach der Fig. 2 ist dieses Konstruktionsdetail genau umgekehrt ausgeführt. Die Stirnfläche 31 stellt die Laufbahn dar und die Rastkörper 39 werden in der Antriebshülse gehalten. Beide Versionen sind möglich. Es gilt das einfache Prinzip, daß das Bauteil mit der größeren Härte die Laufbahn für die Rastkörper stellt.

Zu dem Dämpfventil 3 gehört in einer vorteilhaften Ausführung noch ein weiteres, ein zweites Einzelventil 43, wobei dieses Einzelventil im Hinblick auf kleinere Betriebsdrücke und damit Dämpfkräfte im Schwingungsdämpfer ausgelegt ist.

Zu dem zweiten Einzelventil 43 gehört ein Ventilelement, das mittels einer Steuerkante 45 an einer Trägerhülse 47 aufweist. Die Trägerhülse verfügt über eine zentrale Einströmöffnung 49 und eine Abflußöffnung 51 für das Dämpfmedium. Die Querschnittsüberschneidung zwischen der Abflußöffnung und der Steuerkante bestimmt den Voröffnungsquerschnitt für den Dämpfkraftbereich geringerer Betriebsdrücke. In der gezeichneten Einstellung entspricht der Voröffnungsquerschnitt des zweiten Ventils 43 dem Querschnitt der Abflußöffnung 51.

Ein Rückschlagventil mit einem Kugelkörper 50 sorgt dafür, daß das zweite Einzelventil nur in eine Richtung durchströmbar ist. Geht man davon aus, daß für jede Bewegungsrichtung des Schwingungsdämpfers und damit der Strömungsrichtung des Dämpfmediums ein Dämpfventil 3 vorgesehen ist, so kann wegen des Rückschlagventils auch richtungsabhängig der Voröffnungsquerschnitt eingestellt werden. Innerhalb des Ventilgehäuses 9 ist die Trägerhülse konzentrisch zum ersten Einzelventil angeordnet und wird dabei radial von einer Stufung der Antriebshülse 19 geführt. Im Bereich der Stufung weist die Trägerhülse Öffnungen 53 auf, in die die Antriebshülse formschlüssig eingreift. Bei der Montage werden die beiden Bauteile einfach miteinander verschraubt und ggf. mit einer Gewindesicherungspaste gesichert. Eine Demontage ist bei Bedarf dennoch möglich. Die Antriebshülse und die Trägerhülse sind damit praktisch als ein Bauteil zu betrachten.

Innerhalb der Trägerhülse 47 ist eine Spannhülse 55 installiert, mit deren Hilfe man die Vorspannung einer auf das Ventilelement 45 einwirkenden Feder 57 des zweiten Einzelventils einstellen kann. Dazu dient eine Einstellvorrichtung 59, die neben der Spannhülse 55 auch ein Verdrehelement 61 aufweist. Das Verdrehelement ist wie die Antriebshülse von außen zugänglich und verfügt ebenfalls über Werkzeugflächen 41.

Das Verdrehelement 61 läßt sich zur Trägerhülse 47 verdrehen. Dazu verfügt die Trägerhülse über eine zentrale Stufung, in der das Verdrehelement axial fest aber in Umfangsrichtung verdrehbar gelagert ist. An seinem nach innen gerichteten Ende weist das Verdrehelement einen Steg 63 auf, der an eine Schneide eines Schraubendrehers gleicht. Dieser Steg greift in einen Schlitz 65 der Spannhülse 55 ein, die mit der Trägerhülse über ein Gewinde in Verbindung steht. Bei einer Verdrehbewegung des Verdrehelementes wird die Spannhülse über den Steg ebenfalls verdreht. Dabei wirkt ein Gewinde 67 zwischen der Spannhülse und der Trägerhülse, wodurch die Spannhülse eine Axialbewegung ausführt.

Das zweite Einzelventil läßt sich über eine Rasteinrichtung 69 ebenfalls in ihrer Einstellung arretieren. Dazu dienen die Öffnungen 53 in der Trägerhülse als Rastöffnungen und eine Queröffnung 71 im Verdrehelement als entsprechendes Gegenprofil, wobei kugelige Rastkörper 73 entsprechend der Ausführung beim ersten Einzelventil einen Formschluß zwischen der Trägerhülse und dem Verdrehelement herstellen. Die Queröffnung 71 ermöglicht sehr einfach die Bereitstellung des Raums für die Aufnahme einer Rastfeder 75.

Die beiden Einzelventile lassen sich völlig unabhängig voneinander einstellen. Wird die Antriebshülse 19 in Umfangsrichtung oder zwischen den Raststufen axial bewegt, so führt die Trägerhülse diese Bewegung(en) ebenfalls aus. Das gesamte zweite Einzelventil mit seiner Ventilsitzfläche 45a und dem Ventilkörper 45 ist jedoch innerhalb der Trägerhülse 47 installiert, so daß diese Bewegungen keinen Einfluß auf die Funktion des zweiten Einzelventils ausüben. Umgekehrt kann das zweite Einzelventil zum ersten Einzelventil verstellt werden. Selbst wenn man davon ausgeht, daß die Federkräfte, die die Rasterung halten, bei beiden Ventilen gleich groß sind, so ist der Hebelarm bei der Einstelleinrichtung für das zweite Einzelventil deutlich kleiner als der Hebelarm für die Rasteinrichtung zwischen der Antriebshülse und der Endkappe, so daß das zweite Einzelventil unabhängig vom ersten Einzelventil einstellbar ist.

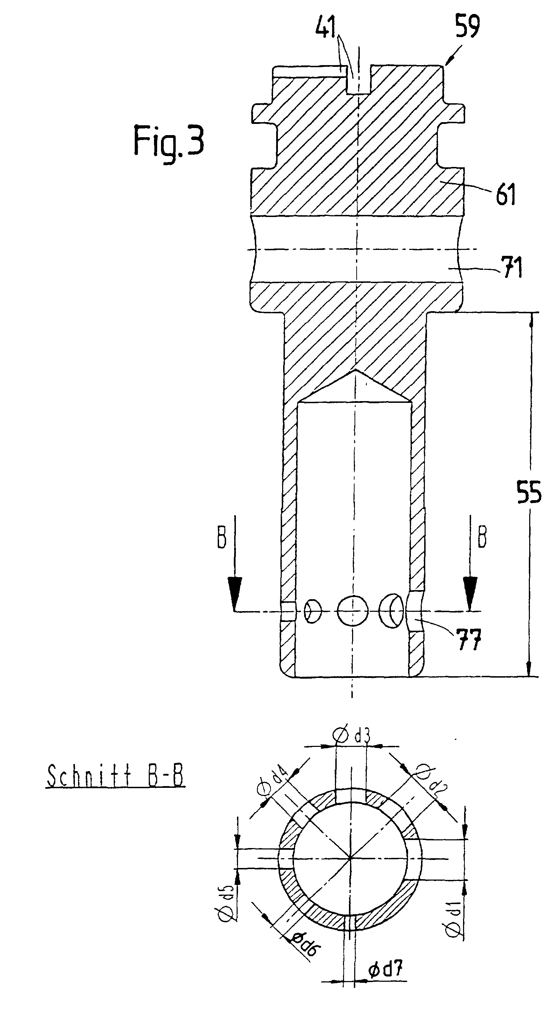

In der Fig. 3 ist eine Abwandlung der Funktionseinheit aus Antriebshülse 61 und Spannhülse 55 in einer einteiligen Baueinheit dargestellt.. Der wesentliche funktionale Unterschied besteht darin, daß in der Spannhülsenabschnitt Blenden 77 verschiedener Durchmesser dᵢ eingearbeitet sind, die in Überdeckung mit der Abströmöffnung 51 den Voröffnungsquerschnitt bzw. den Durchlaßquerschnitt des zweiten Ventils bestimmen und dadurch eine gestufte Einstellung vorgenommen werden kann. Der Spannhülsenabschnitt wird axial nicht mehr bewegt, da eine axiale Fixierung zwischen der Antriebshülse 19 und einer Stufung der Trägerhülse 47 vorliegt (s. Fig. 2). Das Gewinde 67 aus der Fig. 2 kann entfallen.

Mit der Ausführung nach der Fig. 3 sind mehrere Vorteile verbunden. Zum einen werden durch die Blenden ganz exakte Durchlaßquerschnitte eingestellt. Maßliche Toleranzen spielen fast keine Rolle. Wenn man die Abströmöffnung 51 ausreichend groß dimensioniert, spielt eine geringfügige axiale Verschiebung einer Blende keine Rolle hinsichtlich der Größe des Durchlaßquerschnitts.

Ein weiterer Vorteil liegt darin, daß man mit einer Umdrehung des gesamten Elementes sehr viele Voröffnungsquerschnitte, in dieser Ausführung 8 Stufen d₁ bis d₇ und dem geschlossenen Voröffnungsquerschnitt zwischen d₇ und d₁, realisieren kann. Hingegen muß man bei der Ausführung nach der Fig. 2 darauf achten, daß die Gewindesteigung des Gewindes 67 nicht zu klein gewählt wird, da ansonsten beispielsweise die Voröffnungsstufe 6 mit der Voröffnungsstufe 1 auf der Anzeige auf der Stirnseite des Verdrehelementes in Überdeckung kommt, praktisch eine Art Uhr-Zifferblatteffekt eintritt.

Bis auf die beschriebenen Unterschiede entspricht die Ausführung der Fig. 3 genau den Bauteilen 59, 55 und 61. Man kann das Ventilteil der Fig. 3 wie eine Patrone in den Bauraum der Fig. 2 einsetzen.

## Patentansprüche

1. Einstellbares Dämpfventil (3) für einen Schwingungsdämpfer (1), welches umfaßt ein Dämpfventilgehäuse (5) mit einem Ventilblock (7) mit einer Zuströmöffnung (11) im Bereich einer Ventilsitzfläche (15), auf der sich eine Ventilscheibe (13) abstützt, die auf ihrer Rückseite von einer Feder (17) vorgespannt ist, wobei die Vorspannung der Feder (17) zur Veränderung der Dämpfkraft einstellbar ist, indem eine Abstützfläche (21) der Feder (17) verschiebbar ist, wobei die von der Ventilscheibe (13) abgewandte Abstützfläche (21) der Feder (17) mit einer Rasteinrichtung (33; 35; 39) in Wirkverbindung steht und wobei die Rasteinrichtung zur Einstellung der Vorspannung der Feder (17) stufenweise arretierbar ist,
**dadurch gekennzeichnet,**
**daß** die Feder (17), die auf die Ventilscheibe (13) einwirkt, Rastkörper (39) der Rasteinrichtung in einem Rastprofil (35) kraftbeaufschlägt.

2. Dämpfventil nach Anspruch 1,
**dadurch gekennzeichnet,**
**daß** Rasteinrichtung eine verdrehbare Antriebshülse (19) aufweist, die mit einer Verschiebehülse (23) zusammenwirkt, wobei die Verschiebehülse die Abstützfläche (21) aufweist und mittels einer Übersetzungseinrichtung (27; 29) die Drehbewegung der Antriebshülse als eine Axialbewegung ausführt.

3. Dämpfventil nach Anspruch 2,
**dadurch gekennzeichnet,**
**daß** die Übersetzungseinrichtung aus einem Gewinde (27) zwischen der Antriebshülse und der Verschiebehülse (23) besteht, wobei die Bewegungsfähigkeit der Verschiebehülse durch eine Axialführung (29) in Umfangsrichtung blockiert ist.

4. Dämpfventil nach Anspruch 1,
**dadurch gekennzeichnet,**
**daß** als Rastkörper (39) Kugeln eingesetzt werden, die in dem Äquator der Kugeln angepaßte Vertiefungen des Rastprofils (33; 35) einrasten.

5. Dämpfventil nach Anspruch 1,
**dadurch gekennzeichnet,**
**daß** konzentrisch ein weiteres Dämpfventil (43; 45; 57) angeordnet ist, wobei das weitere Dämpfventil aus einer innenliegenden Trägerhülse (47) besteht, in der ein federbelastetes Ventilelement (45) angeordnet ist, wobei die Vorspannung der Feder (57) dieses Dämpfventils mittels einer von außerhalb des Ventilgehäuses zugänglichen Einstellvorrichtung (59) veränderbar ist, indem die Einspannlänge der Feder (57) veränderbar ist, wobei die Einstellvorrichtung ein Verdrehelement (61) aufweist, das relativ zur Trägerhülse verdrehbar ist, die wiederum bezogen auf das weitere Dämpfventil als ortsfest zu betrachten ist, wobei die mögliche Drehbewegung des Verdrehelementes mittels einer zweiten Rasterung (69; 53; 73) arretierbar ist.

6. Dämpfventil nach Anspruch 5,
**dadurch gekennzeichnet,**
**daß** die zweite Rasterung zwischen der Trägerhülse (47) und der Einstellvorrichtung (59) angeordnet ist.

7. Dämpfventil nach Anspruch 5,
**dadurch gekennzeichnet,**
**daß** das Verdrehelement (61) über einen Formschluß in Umfangsrichtung in Eingriff mit einer Spannhülse (55) steht, die axial aber relativ zum Verdrehelement beweglich ist, wobei zwischen der Spannhülse und der Trägerhülse eine Gewindeverbindung (67) vorliegt, so daß eine Bewegung des Verdrehelementes in eine Axialbewegung der Spannhülse umgesetzt wird.

8. Dämpfventil nach Anspruch 5,
**dadurch gekennzeichnet,**
**daß** das Verdrehelement (61) eine Queröffnung (71) aufweist, in der eine Rastfeder (75) im wesentlichen horizontal angeordnet ist, die auf mindestens einen Rastkörper (73) der zweiten Rasteinrichtung einwirkt.

9. Dämpfventil nach Anspruch 8,
**dadurch gekennzeichnet,**
**daß** in der Queröffnung (71) die Rastfeder (75) zwischen zwei gegenüberliegenden Rastkörpern (73) verspannt ist.

10. Dämpfventil nach Anspruch 5,
**dadurch gekennzeichnet,**
**daß** die Rastkörper (73) in Rastöffnungen (53) der Trägerhülse (47) eingreifen, von denen mindestens eine als eine Durchgangsöffnung ausgeführt ist und einen Formschluß mit der Antriebshülse (19) des einen Teilventils (13; 15; 17) eingeht.

## Claims

1. Adjustable damping valve (3) for a vibration damper (1), which damping valve comprising a damping-valve housing (5) with a valve block (7) having an inflow orifice (11) in the region of a valve-seat surface (15), on which is supported a valve disc (13) which is prestressed on its rear side by a spring (17), the prestress of the spring (17) being adjustable in order to vary the damping force, in that a supporting surface (21) of the spring (17) is displaceable, the supporting surface (21), facing away from the valve disc (13), of the spring (17) being connected operatively to a latching device (33; 35; 39), and the latching device being lockable in steps in order to adjust the prestress of the spring (17), **characterized in that** the spring (17), which acts on the valve disc (13), applies force to latching bodies (39) of the latching device in a latching profile (35).

2. Damping valve according to Claim 1, **characterized in that** the latching device has a rotatable drive sleeve (19) which cooperates with a displacement sleeve (23), the displacement sleeve having the supporting surface (21) and, by means of a converting device (27; 29), executing the rotational movement of the drive sleeve as an axial movement.

3. Damping valve according to Claim 2, **characterized in that** the converting device consists of a thread (27) between the drive sleeve and the displacement sleeve (23), the moveability of the displacement sleeve being blocked in the circumferential direction by an axial guide (29).

4. Damping valve according to Claim 1, **characterized in that** the latching bodies (39) used are balls which latch in the equator of depressions of the latching profile (33; 35) which are adapted to the balls.

5. Damping valve according to Claim 1, **characterized in that** a further damping valve (43; 45; 57) is arranged concentrically, the further damping valve consisting of an inner carrier sleeve (47), in which a spring-loaded valve element (45) is arranged, the prestress of the spring (57) of this damping valve being variable by means of an adjusting device (59) accessible from outside the valve housing, **in that** the clamping length of the spring (57) is variable, the adjusting device having a rotation element (61) which is rotatable relative to the carrier sleeve which, in turn, is to be considered as fixed with respect to the further damping valve, the possible rotational movement of the rotation element being lockable by means of a second latching (69; 53; 73).

6. Damping valve according to Claim 5, **characterized in that** the second latching is arranged between the carrier sleeve (47) and the adjusting device (59).

7. Damping valve according to Claim 5, **characterized in that** the rotation element (61) is in engagement in the circumferential direction, via a positive connection, with a clamping sleeve (55) which, however, is moveable axially in relation to the rotation element, a threaded connection (67) being present between the clamping sleeve and the carrier sleeve, so that a movement of the rotation element is converted into an axial movement of the clamping sleeve.

8. Damping valve according to Claim 5, **characterized in that** the rotation element (61) has a transverse orifice (71), in which is arranged essentially horizontally a latching spring (75) which acts on at least one latching body (73) of the second latching device.

9. Damping valve according to Claim 8, **characterized in that** the latching spring (75) is braced in the transverse orifice (71) between two latching bodies (73) located opposite one another.

10. Damping valve according to Claim 5, **characterized in that** the latching bodies (73) engage into latching orifices (53) of the carrier sleeve (47), at least one of which is designed as a passage orifice and makes a positive connection with the drive sleeve (19) of one part-valve (13; 15; 17).

## Revendications

1. Soupape à amortissement variable (3) pour un amortisseur de vibrations (1), qui comprend un logement de soupape à amortissement (5) avec un bloc soupape (7) avec une ouverture d'alimentation (11) dans la région d'une face de siège de soupape (15) sur laquelle s'appuie un disque de soupape (13) qui est précontraint sur son côté arrière par un ressort (17), la précontrainte du ressort (17) étant ajustable pour modifier la force d'amortissement, en déplaçant une face d'appui (21) du ressort (17), la face d'appui (21) du ressort (17) opposée au disque de soupape (13) étant en liaison coopérante avec un dispositif d'encliquetage (33 ; 35 ; 39) et le dispositif d'encliquetage pouvant être bloqué par incréments pour ajuster la précontrainte du ressort (17),
**caractérisée en ce que**
le ressort (17) qui agit sur le disque de soupape (13) sollicite par une force des corps d'encliquetage (39) du dispositif d'encliquetage dans un profil d'encliquetage (25).

2. Soupape à amortissement selon la revendication 1,
**caractérisée en ce que**
le dispositif d'encliquetage présente un manchon d'entraînement rotatif (19) qui coopère avec un manchon coulissant (23), le manchon coulissant présentant la face d'appui (21) et effectuant à l'aide d'un dispositif de transmission (27 ; 29) le mouvement de rotation du manchon d'entraînement sous forme d'un mouvement axial.

3. Soupape à amortissement selon la revendication 2,
**caractérisée en ce que**
le dispositif de transmission se compose d'un filetage (27) entre le manchon d'entraînement et le manchon coulissant (23), la capacité de déplacement du manchon coulissant étant bloquée dans la direction périphérique par une coulisse axiale (29).

4. Soupape à amortissement selon la revendication 1,
**caractérisée en ce que**
l'on utilise comme corps d'encliquetage (29) des billes qui s'encliquètent dans l'équateur des renfoncements du profil d'encliquetage (33 ; 35) adapté aux billes.

5. Soupape à amortissement selon la revendication 1,
**caractérisée en ce que**
l'on dispose concentriquement une autre soupape à amortissement (43 ; 45 ; 57), l'autre soupape à amortissement se composant d'un manchon porteur intérieur (47), dans lequel est disposé un élément de soupape (45) sollicité par ressort, la précontrainte du ressort (57) de cette soupape à amortissement pouvant être modifiée au moyen d'un dispositif d'ajustage (59) accessible depuis l'extérieur du logement de soupape, en modifiant la longueur de serrage du ressort (57), le dispositif d'ajustage présentant un élément de torsion (61) qui peut être tourné par rapport au manchon porteur, qui doit à nouveau être considéré comme fixe par rapport à l'autre soupape à amortissement, le mouvement de rotation possible de l'élément de torsion pouvant être bloqué au moyen d'un deuxième encliquetage (69 ; 53 ; 73).

6. Soupape à amortissement selon la revendication 5,
**caractérisée en ce que**
le deuxième encliquetage est disposé entre le manchon porteur (47) et le dispositif d'ajustage (59).

7. Soupape à amortissement selon la revendication 5,
**caractérisée en ce que**
l'élément de torsion (61) est en prise par le biais d'un engagement positif dans la direction périphérique avec un manchon de serrage (55) qui est déplaçable axialement mais relativement à l'élément de torsion, un raccord fileté (67) existant entre le manchon de serrage et le manchon porteur, de sorte qu'un mouvement de l'élément de torsion soit converti en un mouvement axial du manchon de serrage.

8. Soupape à amortissement selon la revendication 5,
**caractérisée en ce que**
l'élément de torsion (61) présente une ouverture transversale (71) dans laquelle est disposé un ressort d'encliquetage (75) essentiellement horizontalement, lequel agit sur au moins un corps d'encliquetage (73) du deuxième dispositif d'encliquetage.

9. Soupape à amortissement selon la revendication 8,
**caractérisée en ce que**
le ressort d'encliquetage (75) est précontraint dans l'ouverture transversale (71) entre deux corps d'encliquetage (73) opposés.

10. Soupape à amortissement selon la revendication 5,
**caractérisée en ce que**
les corps d'encliquetage (73) viennent en prise dans des ouvertures d'encliquetage (53) du manchon porteur (47), dont au moins un est réalisé sous forme d'ouverture de passage et entre en liaison par engagement positif avec le manchon d'entraînement (19) d'une soupape partielle (13 ; 15 ; 17).
